# EUROPÄISCHE PATENTSCHRIFT

(11) **EP 2 928 726 B1**
(45) Veröffentlichungstag und Bekanntmachung des Hinweises auf die Patenterteilung: **03.06.2020**
(21) Anmeldenummer: 13786651.3
(22) Anmeldetag: 04.11.2013
(51) Int. Cl.: B60Q 1/072

(54) **ZUSATZLICHTMODUL FÜR EINEN SCHEINWERFER EINES FAHRZEUGS**
ADDITIONAL LIGHT MODULE FOR A HEADLAMP OF A VEHICLE
MODULE DE FEU SUPPLEMENTAIRE POUR UN PROJECTEUR DE VEHICULE

(30) Priorität: 30.11.2012 DE 102012111639
(43) Veröffentlichungstag der Anmeldung: 14.10.2015
(73) Patentinhaber: HELLA GmbH & Co. KGaA, 59552 Lippstadt (DE)
(72) Erfinder: HERBERS, Thomas, 59555 Lippstadt (DE)
(86) Internationale Anmeldenummer: PCT/EP2013/072893
(87) Internationale Veröffentlichungsnummer: WO 2014/082817

(56) Entgegenhaltungen:
- EP-A1- 0 588 715
- EP-A1- 1 889 746
- EP-A1- 2 058 174
- EP-A1- 2 578 451
- EP-A2- 0 275 095
- EP-A2- 0 562 581
- DE-A1- 4 438 328
- DE-C- 952 602
- GB-A- 486 030

## Beschreibung

Die vorliegende Erfindung betrifft einen Scheinwerfer eines Fahrzeugs mit einem Zusatzlichtmodul, und das Zusatzlichtmodul kann beispielsweise ein Kurvenlichtmodul, ein Abbiegelichtmodul oder ein Nebellichtmodul bilden. Das Zusatzlichtmodul ist im Gehäuse des Scheinwerfers aufnehmbar und weist ein Leuchtmittel und einen Reflektor auf, über den durch das Leuchtmittel erzeugtes Licht in einer Ausbreitungsrichtung aussendbar ist.

Zusatzlichtmodule können neben Hauptlichtmodulen zur Bereitstellung eines Abblendlichtes oder eines Fernlichtes im Gehäuse eines Scheinwerfers aufgenommen sein und befinden sich meist in einer räumlich nebengeordneten Anordnung zum Hauptlichtmodul im Gehäuse des Scheinwerfers. Neuere Bauarten von Scheinwerfern weisen ruhende, statisch im Scheinwerfer eingebaute Zusatzlichtmodul auf, die für eine Kurvenlichtfunktion, eine Abbiegelichtmodul und/oder eine Nebellichtfunktion lediglich eingeschaltet und wieder ausgeschaltet werden. Derartige Lichtmodule können ebenso wie die Hauptlichtmodule eine Hell-Dunkel-Grenze (HDG) aufweisen, um beispielsweise die Blendung weiterer Verkehrsteilnehmer zu vermeiden. Folglich kann es erforderlich sein, auch die Zusatzlichtmodule in einem Scheinwerfer zu justieren.

### STAND DER TECHNIK

Die DE 101 40 277 A1 zeigt ein Zusatzlichtmodul für einen Scheinwerfer eines Fahrzeugs, das als Kurvenlichtmodul ausgebildet ist und im Gehäuse des Scheinwerfers aufgenommen ist. Das Kurvenlichtmodul ist mit einem Fernlichtmodul einstückig ausgebildet und befindet sich zwischen einem Abblendlichtmodul und dem Fernlichtmodul. Nachteilhafterweise ist eine separate Einstellung des Kurvenlichtmoduls insbesondere hinsichtlich der Ausbreitungsrichtung des durch ein Leuchtmittel des Kurvenlichtmoduls ausgesendeten Lichtes nicht möglich.

Die DE 198 43 817 A1 zeigt einen Scheinwerfer für ein Fahrzeug mit verschiedenen Zusatzlichtmodulen, die neben einem Hauptlichtmodul zur Bereitstellung eines Abblendlichtes im Gehäuse des Scheinwerfers aufgenommen sind. Ein erstes Zusatzlichtmodul ist als Kurvenlichtmodul und ein weiteres Zusatzlichtmodul ist als Nebellichtmodul ausgeführt. Die Zusatzlichtmodule sind als Projektionsmodule ausgebildet und gegen die Ausbreitungsrichtung des Lichtes, das durch das Abblendlichtmodul bereitgestellt wird, angeschrägt. Durch die unveränderbare Schrägstellung des Kurvenlichtmoduls kann dieses im Gehäuse des Scheinwerfers fest eingebaut werden, sodass eine Verstellung insbesondere der Projektionslinse des Kurvenlichtmoduls vermieden werden kann. Dabei kann das Kurvenlicht des der Kurve zugewandten Scheinwerfers unabhängig vom Abblendlicht erzeugt werden und beim Fahren in der Kurve dem Abblendlicht überlagert werden.

Aus DE 10 2006 038 915 A1 ist eine weitere Anordnung eines Zusatzlichtmoduls in einem Scheinwerfer für ein Fahrzeug bekannt, das um eine Achse mittels eines Leuchtweitenstellers verschwenkt werden kann. Dabei ist die Aufnahme des Zusatzlichtmoduls lediglich schematisch gezeigt, und durch die Verschwenkung um die horizontal verlaufende Achse kann die Leuchtweite des durch das Kurvenlichtmodul ausgesendeten Lichtes verändert werden, um beispielsweise die Blendung anderer Verkehrsteilnehmer zu vermeiden. Weitere Scheinwerfer sind aus DE952602 C, GB486030 A oder EP0275095 A2 bekannt.

Scheinwerfer neuerer Bauart werden bevorzugt aus statischen Lichtmodulen mit Halbleiterlichtquellen aufgebaut, und eine Zusatzlichtfunktion wie ein Kurvenlicht, ein Abbiegelicht und/oder ein Nebellicht werden bei Bedarf zugeschaltet, indem das dem Zusatzlichtmodul zugeordnete Leuchtmittel in Betrieb genommen wird, ohne das Lichtmodul mechanisch im Scheinwerfer zu bewegen. Beispielsweise kann ein Kurvenlichtmodul starr im Gehäuse des Scheinwerfers aufgenommen, und einem eingeschalteten Abblendlicht zugeschaltet werden, beispielsweise wenn das Fahrzeug um eine Kurve fährt oder wenn eine Abbiegesituation vorliegt, sodass durch das Kurvenlichtmodul zugleich eine Abbiegelichtfunktion erfüllt werden kann.

Trotz der statischen Einbausituation weiterer Lichtmodule in Scheinwerfern neuerer Bauart ist eine Einstellung der Zusatzlichtmodule wenigstens zu Justagezwecken erforderlich. Hierfür werden zumeist Tragrahmen vorgesehen, über die die Zusatzlichtmodule im Gehäuse des Scheinwerfers bewegbar bzw. einstellbar aufgenommen werden. Durch zunehmend verwendete Halbleiterlichtquellen entstehen am Einbauort der Lichtquellen jedoch erhebliche Wärmemengen, die über Kühlkörper abgeführt werden müssen, und es ist zumeist vorgesehen, die Leuchtmittel über die Kühlkörper im Tragrahmen aufzunehmen. Eine effektive Wärmeableitung und eine einfache Aufnahme der Zusatzlichtmodule wird dadurch jedoch erschwert, da die Kühlkörper massebehaftet sind und bei dynamischer Belastung des Scheinwerfers auf den Tragrahmen erhöhte Kräfte wirken lassen. Insbesondere ergibt sich durch die unzugängliche Einbausituation der Zusatzlichtmodule im Scheinwerfer eine erschwerte Justagemöglichkeit, sodass bei der Einrichtung des Scheinwerfers vor dem Einbau in ein Fahrzeug ein erheblicher Justageaufwand entstehen kann.

### OFFENBARUNG DER ERFINDUNG

Ausgehend von den Nachteilen des Standes der Technik ergibt sich die Aufgabe der Erfindung, ein Zusatzlichtmodul zum Einbau in das Gehäuse eines Scheinwerfers mit einer Einstellmöglichkeit der Lage des Zusatzlichtmoduls im Gehäuse zu schaffen, sodass sich trotz der Einstellmöglichkeit eine mechanisch belastbare Anordnung des Zusatzlichtmoduls im Gehäuse des Scheinwerfers ergibt. Zusätzlich ergibt sich die Aufgabe, eine vorteilhafte Entwärmung des Leuchtmittels im Lichtmodul zu ermöglichen.

Diese Aufgabe wird ausgehend von einem Scheinwerfer mit einem Zusatzlichtmodul gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass ein Grundkörper vorgesehen ist, an dem wenigstens das Leuchtmittel und der Reflektor aufgenommen sind und wobei der Grundkörper mittels einer Drehachse und mittels einer Verstelleinheit zur Verstellung des Zusatzlichtmoduls um die Drehachse im Gehäuse des Scheinwerfers haltend aufgenommen ist.

Die Erfindung geht dabei von dem Gedanken aus, das Zusatzlichtmodul mit einem Grundkörper auszubilden, über den das Zusatzlichtmodul ohne einen erforderlichen Tragrahmen direkt im Gehäuse des Scheinwerfers angeordnet werden kann. Dabei kann eine direkte Verbindung des Grundkörpers mit dem Gehäuse des Scheinwerfers erzeugt werden, erfindungsgemäß mittels der Drehachse und mittels der Verstelleinheit. Durch die Verstelleinheit kann die Lage des Grundkörpers im Gehäuse des Scheinwerfers verändert werden, sodass zugleich die Ausbreitungsrichtung des durch das Leuchtmittel erzeugten und über den Reflektor ausgesendeten Lichtes eingestellt werden kann. Ist der Scheinwerfer beispielsweise starr im Rahmen des Fahrzeugs eingebaut, so kann über die Verstelleinheit die Ausbreitungsrichtung des Lichtes insbesondere in der Vertikalen eingestellt, justiert werden. Dabei kann die Justierung durch einmaligen Eingriff in die Verstelleinheit bei der Einrichtung des Scheinwerfers vorgenommen werden, die während des Betriebs des Scheinwerfers im Fahrzeug unverändert bleibt. Durch die Verwendung einer Drehachse zur Verbindung zwischen dem Grundkörper und dem Gehäuse des Scheinwerfers entsteht eine mechanisch belastbare, robuste Aufnahme des Grundkörpers im Gehäuse des Scheinwerfers. Ferner wird durch den Grundkörper der Vorteil geschaffen, dass mehrere das Zusatzlichtmodul bildende Komponenten am Grundkörper aufgenommen werden können. Beispielsweise können das Leuchtmittel und der Reflektor unmittelbar am Grundkörper angeordnet werden, sodass diese Komponenten nicht nachträglich zueinander justiert werden müssen.

Erfindungsgemäß kann die Lagerung der Lichteinheit zur Einstellung direkt an den für die Lichtfunktion benötigten Teilen erfolgen, ohne zusätzliche Bauteile zu verwenden, die zur Lagerung des Lichtmoduls im Gehäuse zusätzliche Achsen definieren, über die mit Schrauben und sonstigen Einstellmitteln die Ausbreitungsrichtung des Lichtes durch das Zusatzlichtmodul eingestellt werden muss. Insbesondere normative Vorgaben bezüglich der Hell-Dunkel-Grenze können durch die erfindungsgemäße Anordnung des Zusatzlichtmoduls über den Grundkörper auf einfache Weise voreingestellt werden, da auch durch ein Zusatzlichtmodul bereitgestelltes Licht eine Hell-Dunkel-Grenze aufweist, die einen maximalen vertikalen Bereich nicht überschreiten darf.

Das Zusatzlichtmodul kann vorzugsweise ohne Projektorlinse ausgeführt sein, sodass ein oder mehrere Leuchtmittel einen Reflektor ausleuchten, durch den das Licht in einer Ausbreitungsrichtung direkt ausgesendet wird. Die Ausbreitungsrichtung beschreibt dabei den Lichtschwerpunkt des ausgesendeten Lichtes.

Nach einer vorteilhaften Ausführungsform kann der Grundkörper einteilig ausgebildet sein, wobei die Drehachse wenigstens teilweise durch den Grundkörper verlaufen kann. Insbesondere kann der Grundkörper aus einem metallischen Werkstoff bestehen, insbesondere aus Aluminium, sodass eine Entwärmung wenigstens des Leuchtmittels auf effektive Weise erfolgen kann. Durch die vergleichsweise große Oberfläche des Grundkörpers kann eine Wärmeableitung des Leuchtmittels bereits ausreichend sein, ohne zusätzliche Kühlkörper verwenden zu müssen. Der Grundkörper kann insbesondere aus einem solchen Material bestehen, dass dieser in einem Metall-Druckgussverfahren hergestellt werden kann. Durch die einteilige Ausführung des Grundkörpers wird dabei die Wärmeableitung aus dem Leuchtmittel weiter begünstigt.

Verläuft die Drehachse wenigstens teilweise durch den Grundkörper, entsteht eine mechanisch besonders belastbare, stabile Verbindung zwischen dem Grundkörper und dem Gehäuse des Scheinwerfers. Die Drehachse kann dabei durch einen gegenständlichen Achsbolzen gebildet sein, oder die Drehachse verläuft als imaginäre Achse durch zwei Anbindungspunkte zwischen dem Grundkörper und dem Gehäuse des Scheinwerfers.

Ein weiterer Vorteil wird dadurch erreicht, dass die Ausbreitungsrichtung des Lichtes im Wesentlichen in einer Horizontalen verläuft, und durch die Drehachse und durch einen zwischen dem Grundkörper und der Verstelleinheit gebildeten Anbindungspunkt wird eine Verstellebene in einer ebenfalls horizontalen Richtung aufgespannt, sodass die Ausbreitungsrichtung des Lichtes im Wesentlichen parallel über der Verstellebene verläuft. In der Einbausituation des Scheinwerfers verläuft die Verstellebene etwa in der Horizontalen, und über der Verstellebene liegt die Ausbreitungsrichtung des Lichtes, die durch den Lichtschwerpunkt des ausgesendeten Lichtfeldes definiert ist. Die Drehachse liegt dabei auf der hinteren, der Ausbreitungsrichtung des Lichtes abgewandten Seite, und wird die Verstelleinheit aktiviert, so wird die Verstellebene in der der Ausbreitungsrichtung zugewandten Richtung angehoben oder abgesenkt, wodurch eine Verkippung des Grundkörpers um die Drehachse erzeugt wird. Wird beispielsweise die vordere Seite des Grundkörpers abgesenkt, so sinkt die Hell-Dunkel-Grenze des ausgesendeten Lichtes. Wird die vordere Seite des Grundkörpers angehoben, so steigt die Hell-Dunkel-Grenze vertikal nach oben. Durch die etwa horizontal aufgespannte Verstellebene entsteht eine mechanisch stabile Einbausituation des Grundkörpers, der eine geringe Anfälligkeit gegen mechanische Einflüsse, insbesondere mechanische Schwingungen aufweist. Folglich kann auch das mit dem Zusatzlichtmodul bereitgestellte Licht zuverlässig und genau einjustiert werden.

Nach einer vorteilhaften Ausführungsform weist die Verstelleinheit eine Verstellschraube auf, die sich insbesondere vertikal durch das Gehäuse des Scheinwerfers erstreckt und von der Außenseite des Gehäuses bedienbar ist. Die Verstellschraube kann beispielsweise in eine Gewindebohrung eingeschraubt sein, die im Grundkörper vorhanden ist. Im Gehäuse des Scheinwerfers kann eine Öffnung vorgesehen sein, durch die sich die Verstellschraube hindurch erstreckt, sodass beispielsweise der Schraubenkopf der Verstellschraube außerhalb des Gehäuses des Scheinwerfers liegt.

Mit weiterem Vorteil umfasst die Verstelleinheit ein elastisches Element das zwischen dem Grundkörper und dem Gehäuse angeordnet ist. Das elastische Element kann dabei leicht gequetscht sein, und insbesondere kann die Verstellschraube durch das elastische Element hindurchgeführt sein. Wird die Verstellschraube in die Gewindebohrung im Grundkörper weiter eingeschraubt, so wird die Quetschkraft auf das elastische Element erhöht, und zugleich wird der Anbindungspunkt zwischen der Verstelleinheit und dem Grundkörper abgesenkt. Wird die Verstellschraube leicht aus der Gewindebohrung im Grundkörper herausgeschraubt, so erfolgt dies unter elastischer Entspannung des elastischen Elementes, wodurch zugleich der Anbindungspunkt des Grundkörpers zur Verstelleinheit wieder angehoben wird. Erstreckt sich die Verstellschraube vorzugsweise durch das elastische Element, so kann das elastische Element die Öffnung im Gehäuse des Scheinwerfers zur Hindurchführung der Verstellschraube abdichten, sodass das Eindringen von Nässe und Verunreinigungen in das Gehäuse des Scheinwerfers verhindert wird. Ferner können durch das elastische Element Späne aufgefangen werden, die beim Einschrauben der Verstellschraube in den Grundkörper entstehen können.

Durch die Einbausituation des Zusatzlichtmoduls im Gehäuse des Scheinwerfers und die vorzugsweise bodenseitige Anordnung des Grundkörpers im Gehäuse kann die Verstellschraube auf der unteren Seite des Scheinwerfers aus dem Gehäuse herausgeführt sein. Diese ist somit nur dann für einen Bediener und insbesondere einen Monteur erreichbar, wenn sich der Scheinwerfer noch nicht im eingebauten Zustand im Fahrzeug befindet. Folglich dient die Justage des Zusatzlichtmoduls mittels der Verstelleinheit lediglich der einmaligen Anwendung, und eine Nachjustage oder eine Kalibrierung des Zusatzlichtmoduls im Scheinwerfer, beispielsweise im Rahmen einer Wartung, ist nicht vorgesehen. Die Verstelleinheit kann jedoch zu jedem weiteren Zeitpunkt nachträglich aktiviert werden, um die Lage des Grundkörpers im Gehäuse des Scheinwerfers zu verändern.

Mit weiterem Vorteil kann eine Temperaturmesseinrichtung vorgesehen sein, die auf dem Grundkörper aufgenommen ist. Mit der Temperaturmesseinrichtung kann die Temperatur im Grundkörper gemessen werden, womit auf die Temperatur im Leuchtmittel geschlossen werden kann. Beispielsweise kann bei Erreichen einer Grenztemperatur die Leistung des wenigstens einen Leuchtmittels reduziert oder abgeschaltet werden.

Ein weiterer Vorteil wird dadurch erreicht, dass der Grundkörper mit dem Leuchtmittel, dem Reflektor und/oder der Temperaturmesseinrichtung einen Schwerpunkt aufweist, der von der Verstellebene überdeckt ist und insbesondere in der Verstellebene liegt. Eine Überdeckung durch die Verstellebene liegt vor, wenn aus senkrechter Sicht der Schwerpunkt innerhalb der Verstellebene liegt. Hingegen liegt der Schwerpunkt dann in der Verstellebene, wenn dieser innerhalb der Vertikalebene liegt und der vertikale Abstand zwischen dem Schwerpunkt und der Verstellebene nahe oder gleich null ist.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine Teilansicht eines Scheinwerfers mit einem Zusatzlichtmodul in einer eingebauten Situation im Gehäuse des Scheinwerfers,
- Fig. 2: eine perspektivische Ansicht des Zusatzlichtmoduls,
- Fig. 3: eine schematische Ansicht eines Zusatzlichtmoduls einer ersten Ausführungsform und
- Fig. 4: eine weitere schematische Ansicht eines Zusatzlichtmoduls in einer abgewandelten Ausführungsform.

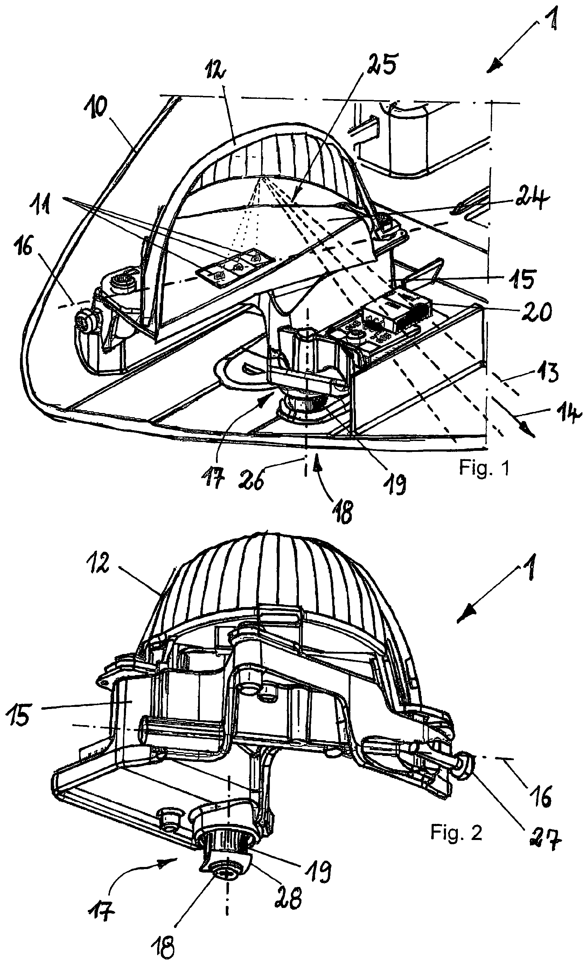

Figur 1 zeigt in einer perspektivischen Ansicht einen Ausschnitt eines Gehäuses 10 eines Scheinwerfers, in dem ein Zusatzlichtmodul 1 aufgenommen ist. Das Zusatzlichtmodul 1 ist beispielhaft als Kurvenlichtmodul ausgeführt und weist drei Leuchtmittel 11 auf, die schematisch angedeutet sind. Die Leuchtmittel 11 befinden sich hinter bzw. unterhalb eines Blendenkörpers 24, sodass das durch das Leuchtmittel 11 bereitgestellte Licht 13 durch eine am Blendenkörper 24 gebildete abschattende Kante 25 vorbeiläuft und dadurch eine Hell- Dunkel- Grenze aufweist. Die Ausbreitungsrichtung 14 des Lichtes 13 ist lediglich schematisch gezeigt und kann in jeder weiteren Richtung verlaufen, die der Öffnungsrichtung des Reflektors 12 entspricht, der Bestandteil des Zusatzlichtmoduls 1 ist.

Erfindungsgemäß weist das Zusatzlichtmodul 1 einen Grundkörper 15 auf, auf dem die Leuchtmittel 11 und der Reflektor 12 aufgenommen sind. Der Grundkörper 15 ist über eine Drehachse 16 und eine Verstelleinheit 17 zur Verstellung des Grundkörpers 15 um die Drehachse 16 im Gehäuse 10 des Scheinwerfers haltend aufgenommen. Die Verstelleinheit 17 ermöglicht eine Verstellung des Grundkörpers 15 in einer Verstellachse 26, die etwa in der Vertikalen verläuft und insbesondere etwa senkrecht ausgerichtet und beabstandet zur Drehachse 16 ausgerichtet ist. Die Drehachse 16 verbindet dabei den Grundkörper 15 mit dem Gehäuse 10 des Scheinwerfers und erstreckt sich in einer Querverlaufsrichtung, zu der die Ausbreitungsrichtung 14 des Lichtes 13 etwa orthogonal verläuft. Wird die Lage des Grundkörpers 15 im Gehäuse 10 des Scheinwerfers entlang der vertikalen Verstellachse 26 verändert, so kippt der Grundkörper 15 und die auf diesem aufgebauten Komponenten um die Drehachse 16, sodass die Ausbreitungsrichtung 14 des Lichtes 13 in der Vertikalen verändert wird. Durch die abschattende Kante 25 des Blendenkörpers 24 erhält das Licht 13 eine Hell-Dunkel-Grenze, die durch Verstellung der Verstelleinheit 17 in der Vertikalen verändert werden kann.

Die Verstelleinheit 17 umfasst eine Verstellschraube 18, die außerhalb des Gehäuses 10 auf der Unterseite angeordnet ist und damit in Figur 1 nicht sichtbar ist. Im Grundkörper 15 befindet sich eine Gewindebohrung, in die die Verstellschraube 18 eingeschraubt ist, um den Grundkörper 15 im Verbindungspunkt zwischen der Verstelleinheit 17 und dem Grundkörper 15 in der Vertikalen zu verändern. Hierfür wird ein elastisches Element 19 zwischen dem Grundkörper 15 und der Innenseite des Gehäuses 10 elastisch zusammengedrückt, und wird die Verstellschraube 18 aus dem Grundkörper 15 wieder leicht herausgeschraubt, so bewirkt das elastische Element 19 durch eine elastische Entspannung das Hochdrücken des Grundkörpers 15, sodass ein Verstellmechanismus des Grundkörpers 15 sowohl nach oben als auch nach unten geschaffen ist, und sodass der Grundkörper 15 um die Drehachse 16 verkippt.

Weiterhin dargestellt ist eine Temperaturmesseinrichtung 20, die auf dem Grundkörper 15 angeordnet ist. Die Temperaturmesseinrichtung 20 dient zur Erfassung der Temperatur des Grundkörpers 15, der aus Aluminium ausgebildet sein kann und damit einen Wärmeleiter bildet. Erreichen die Leuchtmittel 11 eine Grenztemperatur, so kann diese durch die Temperaturmesseinrichtung 20 über den Grundkörper 15 gemessen werden, woraufhin die Leuchtmittel 11 gedimmt oder ausgeschaltet werden können, um eine Überhitzung zu vermeiden.

Figur 2 zeigt in einer perspektivischen Ansicht das Zusatzlichtmodul 1 mit dem Grundkörper 15 und dem auf diesen aufgesetzten Reflektor 12. Die Perspektive zeigt den Verlauf der Drehachse 16, die als Schwenkbolzen ausgeführt sein (nicht sichtbar) kann und mit einem Sicherungsschraubelement 27 im Grundkörper 15 gesichert ist.

Durch die Perspektive ist die Verstelleinheit 17 mit der Verstellschraube 18 und dem elastischen Element 19 näher dargestellt. Unter dem Schraubenkopf der Verstellschraube 18 befindet sich ein Ausgleichselement 28, das halbzylinderförmig ausgeführt ist und eine Winkelverstellung des Verlaufes der Verstellschraube 18 in der Verstellachse 26 gegenüber dem Gehäuse 10 des Scheinwerfers ausgleicht, wenn der Grundkörper 15 um die Drehachse 16 verkippt wird, woraus auch eine leichte Verkippung der Verstellachse 26 verursacht wird.

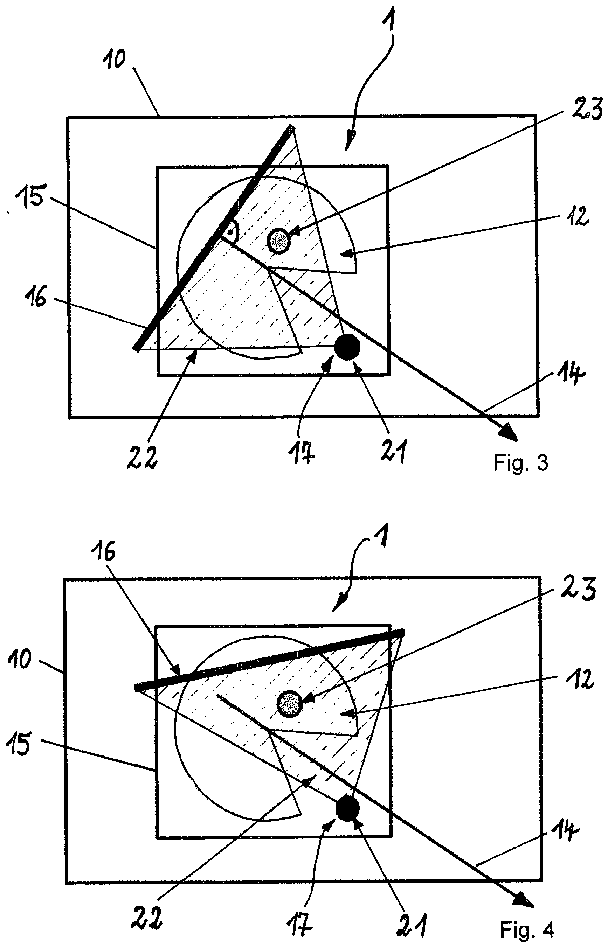

Figur 3 zeigt eine schematische Ansicht des Zusatzlichtmoduls 1 in einem Gehäuse 10 eines Scheinwerfers. Der Grundkörper 15 ist über die Drehachse 16 aufgenommen und im Anbindungspunkt 21 durch die darunter liegende Verstelleinheit 17 verstellbar. Dadurch verkippt der Grundkörper 15 um die Drehachse 16. Durch die Drehachse 16 und den Anbindungspunkt 21 wird eine Verstellebene 22 aufgespannt, und die Ausbreitungsrichtung 14 des Lichtes verläuft über der Verstellebene 22. Insbesondere weist die Ausbreitungsrichtung 14 des Lichtes eine Richtung auf, die zur Drehachse 16 des Zusatzlichtmoduls 1 eine Orthogonale bildet, angedeutet durch einen rechten Winkel. Weiterhin ist ein Schwerpunkt 23 abgedeutet, der den Masseschwerpunkt des Grundkörpers 15, des Leuchtmittels 11 und des Reflektors 12 sowie gegebenenfalls der Temperaturmesseinrichtung 20 bildet. Dabei liegt der Schwerpunkt 23 vorteilhafterweise innerhalb der Verstellebene 22, die durch die Drehachse 16 und den Anbindungspunkt 21 der Verstelleinheit 17 eine dreieckförmige Begrenzung aufweist. Wird die Verstelleinheit 17 aktiviert und der Anbindungspunkt 21 in der Höhe verstellt, so kippt der Grundkörper 15 um die Drehachse 16, wodurch die Ausbreitungsrichtung 14 des Lichtes 13 in der Vertikalen verstellt wird. Dabei ist die Auswirkung der Vertikalverstellung der Ausbreitungsrichtung 14 vergleichsweise hoch, da diese etwa über dem Anbindungspunkt 21 verläuft.

Figur 4 zeigt eine abgewandelte Ausführungsform des Zusatzlichtmoduls 1 mit dem Grundkörper 15, auf dem der Reflektor 12 schematisch angeordnet gezeigt ist. Der Grundkörper 15 ist um die Drehachse 16 verschwenkbar, indem die Verstelleinheit 17 aktiviert wird und der Anbindungspunkt 21 in der Höhe verändert wird. Weiterhin gezeigt ist die Verstellebene 22, die zwischen der Drehachse 16 und dem Anbindungspunkt 21 aufgespannt ist.

Die Ausbreitungsrichtung 14 des Lichtes 13 verläuft gemäß diesem Ausführungsbeispiel nicht orthogonal zur Erstreckungsrichtung der Drehachse 16, sodass eine Höhenänderung des Anbindungspunktes 21 neben einer Vertikalverstellung der Ausbreitungsrichtung 14 eine Verkippung des sich in Ausbreitungsrichtung 14 ausbreitenden Lichtes 13 erzeugt wird. Der Schwerpunkt 23 der Anordnung aus Grundkörper 15, dem Reflektor 12 und den Leuchtmitteln 11 liegt dabei im Flächenzentrum der dreieckförmigen Verstellebene 22.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumliche Anordnungen, können sowohl für sich als auch in den verschiedensten Kombinationen erfindungswesentlich sein. Die mit "horizontal", vertikal", "senkrecht" oder "waagerecht" beschriebenen Richtungen und Ausrichtungen geben nur ungefähre Richtungen mit Bezeug auf die gebrauchsübliche Einbaulage eines Scheinwerfers in einem Fahrzeug an.

### Bezugszeichenliste

- 1: Zusatzlichtmodul

- 10: Gehäuse
- 11: Leuchtmittel
- 12: Reflektor
- 13: Licht
- 14: Ausbreitungsrichtung
- 15: Grundkörper
- 16: Drehachse
- 17: Verstelleinheit
- 18: Verstellschraube
- 19: elastisches Element
- 20: Temperaturmesseinrichtung
- 21: Anbindungspunkt
- 22: Verstellebene
- 23: Schwerpunkt
- 24: Blendenkörper
- 25: abschattende Kante
- 26: Verstellachse
- 27: Sicherungsschraubelement
- 28: Ausgleichselement

## Patentansprüche

1. Scheinwerfer eines Fahrzeugs mit einem Zusatzlichtmodul (1), insbesondere Kurvenlichtmodul, Abbiegelichtmodul oder Nebellichtmodul, das im Gehäuse (10) des Scheinwerfers aufnehmbar ist, umfassend ein Leuchtmittel (11) und einen Reflektor (12), über den durch das Leuchtmittel (11) erzeugtes Licht (13) in einer im Wesentlichen horizontalen Ausbreitungsrichtung (14) aussendbar ist, wobei ein Grundkörper (15) vorgesehen ist, an dem wenigstens das Leuchtmittel (11) und der Reflektor (12) aufgenommen sind und wobei der Grundkörper (15) mittels einer Drehachse (16) und mittels einer Verstelleinheit (17) zur Verstellung des Zusatzlichtmoduls (1) um die Drehachse (16) im Gehäuse (10) des Scheinwerfers haltend aufgenommen ist, wobei die Verstelleinheit (17) zur Verkippung des Grundkörpers (15) um die Drehachse (16) ausgebildet ist, und wobei durch die Drehachse (16) und durch einen zwischen dem Grundkörper (15) und der Verstelleinheit (17) gebildeten Anbindungspunkt (21) eine Verstellebene (22) aufgespannt ist, wobei
- die Verstelleinheit (17) eine Verstellschraube (18) umfasst und wobei
- die Verstelleinheit (17) ein elastisches Element (19) umfasst, das zwischen dem Grundkörper (15) und dem Gehäuse (10) angeordnet ist, und
- wird die Verstellschraube (18) in eine Gewindebohrung im Grundkörper (15) eingeschraubt, so wird die Quetschkraft auf das elastische Element (19) erhöht, und ein Anbindungspunkt zwischen der Verstelleinheit (17) und dem Grundkörper (15) wird abgesenkt und
- wird die Verstellschraube (18) aus der Gewindebohrung im Grundkörper (15) herausgeschraubt, so erfolgt dies unter elastischer Entspannung des elastischen Elementes (19), wodurch der Anbindungspunkt des Grundkörpers (15) zur Verstelleinheit (17) angehoben wird,
**dadurch gekennzeichnet, dass** die Ausbreitungsrichtung (14) des Lichtes (13) im Wesentlichen parallel über die Verstellebene (22) verläuft und dass
- der Grundkörper (15) mit dem Leuchtmittel (11) und dem Reflektor (12) einen Schwerpunkt (23) aufweist, der in der Verstellebene (22) liegt.

2. Scheinwerfer nach Anspruch 1, **dadurch gekennzeichnet, dass** der Grundkörper (15) einteilig ausgebildet ist und wobei die Drehachse (16) wenigstens teilweise durch den Grundkörper (15) verläuft.

3. Scheinwerfer nach Anspruch 1 oder 2, **dadurch gekennzeichnet, dass** der Grundkörper (15) aus einem metallischen Werkstoff, insbesondere aus Aluminium, ausgebildet ist und zur Entwärmung wenigstens des Leuchtmittels (11) dient.

4. Scheinwerfer nach einem der vorgenannten Ansprüche, **dadurch gekennzeichnet, dass** die Verstellschraube (18) sich vertikal durch das Gehäuse (10) des Scheinwerfers erstreckt und von der Außenseite des Gehäuses (10) bedienbar ist.

5. Scheinwerfer nach einem der vorgenannten Ansprüche, **dadurch gekennzeichnet, dass** eine Temperaturmesseinrichtung (20) vorgesehen ist, die auf dem Grundkörper (15) aufgenommen ist.

6. Scheinwerfer nach Anspruch 5, **dadurch gekennzeichnet, dass** der Grundkörper (15) mit dem Leuchtmittel (11), dem Reflektor (12) und der Temperaturmesseinrichtung (20) einen Schwerpunkt (23) aufweist, der von der Verstellebene (22) überdeckt ist und insbesondere in der Verstellebene (22) liegt.

## Claims

1. Headlight of a vehicle with an additional light module (1), in particular a cornering light module, turning light module or fog light module that can be accommodated in the housing (10) of the headlight, comprising a light source (11) and a reflector (12) via which the light (13) generated by the light source (11) can be emitted in an essentially horizontal direction of propagation (14), where a base body (15) is provided for to which at least the light source (11) and the reflector (12) are mounted and where the base body (15) is mounted so as to be held by means of a axis of rotation (16) and by means of an adjusting unit (17) for adjusting the additional light module (1) around the axis of rotation (16) in the housing (10) of the headlight, where the adjusting unit (17) for tilting the base body (15) is formed around the axis of rotation (16), and where an adjusting plane is (22) spanned out by the axis of rotation (16) and an attachment point (21) formed between the base body (15) and the adjusting unit (17), where
- the adjusting unit (17) comprises an adjusting screw (18) and where
- the adjusting unit (17) comprises an elastic element (19) that is arranged between the base body (15) and the housing (10), and
- screwing the adjusting screw (18) into a threaded hole in the base body (15) increases the squeezing force exerted on the elastic element (19) and an attachment point between the adjusting unit (17) and the base body (15) is lowered and
- screwing the adjusting screw (18) out of the threaded hole in the base body (15) brings about an elastic relaxation of the elastic element (19), which causes the attachment point of the base body (15) to the adjusting unit (17) to rise,
**characterized in that**
the direction of propagation (14) of the light (13) runs essentially parallel over the adjusting plane (22)
and **in that**
- the base body (15) with the light source (11) and the reflector (12) features a centroid (23) lying in the adjusting plane (22).

2. Headlight
in accordance with Claim 1, **characterized in that** the base body (15) is formed as one piece and where the axis of rotation (16) runs at least partially through the base body (15).

3. Headlight
in accordance with Claim 1 or 2, **characterized in that** the base body (15) is formed from a metallic material in particular aluminum and serves to dissipate heat at least from the light source (11).

4. Headlight
in accordance with one of the aforementioned Claims **characterized in that** the adjusting screw (18) extends vertically through the housing (10) of the headlight and can be operated from outside the housing (10).

5. Headlight
in accordance with one of the aforementioned Claims **characterized in that** a temperature measuring device (20) is provided for that is mounted on the base body (15).

6. Headlight
in accordance with Claim 5 **characterized in that** the base body (15) with the light source (11), the reflector (12) and the temperature measuring device (20) features a centroid (23) that is covered by the adjusting plane (22) and lies in particular in the adjusting plane (22).

## Revendications

1. Phare d'un véhicule avec un module lumineux supplémentaire (1), notamment module lumineux de virage (statique ou dynamique) ou de brouillard, pouvant être logé dans le boîtier (10) du phare, comprenant une ampoule (11) et un réflecteur (12) permettant de diffuser (14) essentiellement à l'horizontale la lumière (13) émise par l'ampoule (11), sachant qu'un corps de base (15) est prévu, sur lequel sont disposés au moins l'ampoule (11) et le réflecteur (12) et sachant que le corps de base (15) est fixé dans le boîtier (10) du phare à l'aide d'un axe pivotant (16) et d'une unité de réglage (17) pour le déplacement du module lumineux supplémentaire (1) autour de l'axe pivotant (16), sachant que l'unité de réglage (17) est conçue pour faire basculer le corps de base (15) autour de l'axe pivotant (16) et sachant qu'une zone de réglage (22) s'étend entre l'axe pivotant (16) et le point de raccordement (21) situé entre le corps de base (15) et l'unité de réglage (17), sachant que,
- l'unité de réglage (17) comprend une vis de réglage (18) et sachant que
- l'unité de réglage (17) comprend un élément élastique (19) disposé entre le corps de base (15) et le boîtier (10), et que,
- lorsque la vis de réglage (18) est vissée dans le trou taraudé du corps de base (15), la force d'écrasement exercée sur l'élément élastique (19) augmente et le point de raccordement entre l'unité de réglage (17) et le corps de base (15) s'abaisse, et que,
- lorsque la vis de réglage (18) est dévissée du trou taraudé du corps de base (15), l'élément élastique est relâché (19) ce qui relève le point de raccordement entre le corps de base (15) et l'unité de réglage (17),
**caractérisé en ce que,**
la direction de la diffusion (14) de la lumière (13) est essentiellement parallèle à la zone de réglage (22)
et que
- le corps de base (15) forme avec l'ampoule (11) et le réflecteur (12) un axe principal (23) se trouvant dans la zone de réglage (22).

2. Phare
selon la revendication 1, **caractérisé en ce que,** le corps de base (15) est un composant monobloc et sachant que l'axe pivotant (16) passe au moins en partie par le corps de base (15).

3. Phare
selon la revendication 1 ou 2, **caractérisé en ce que,** le corps de base (15) est constitué d'un matériau métallique, notamment l'aluminium, et sert au moins à la dissipation de la chaleur de l'ampoule (11).

4. Phare
selon l'une des revendications ci-dessus, **caractérisé en ce que,** la vis de réglage (18) passe verticalement dans le boîtier (10) du phare et peut être manipulée depuis l'extérieur du boîtier (10).

5. Phare
selon l'une des revendications ci-dessus, **caractérisé en ce que,** un dispositif de mesure de la température (20) est prévu et disposé sur le corps de base (15).

6. Phare
Selon la revendication 5, **caractérisé en ce que,** le corps de base (15) forme avec l'ampoule (11), le réflecteur (12) et le dispositif de mesure de la température (20) un axe principal (23) traversant notamment la zone de réglage (22) qui le recouvre.
